# EUROPÄISCHE PATENTSCHRIFT

(11) **EP 4 404 161 B1**
(45) Veröffentlichungstag und Bekanntmachung des Hinweises auf die Patenterteilung: **03.06.2026**
(21) Anmeldenummer: 23216097.8
(22) Anmeldetag: 13.12.2023
(51) Int. Cl.: G08B 13/196, G06V 20/52, G07C 9/28, H04N 7/18

(54) **SENSORSYSTEM UND VERFAHREN ZUM BETRIEB EINES SENSORSYSTEMS**
SENSOR SYSTEM AND METHOD FOR OPERATING A SENSOR SYSTEM
SYSTÈME DE CAPTEUR ET PROCÉDÉ DE FONCTIONNEMENT D'UN SYSTÈME DE CAPTEUR

(30) Priorität: 18.01.2023 DE 102023101107
(43) Veröffentlichungstag der Anmeldung: 24.07.2024
(73) Patentinhaber: Krebs, Matthias, 73105 Dürnau (DE)
(72) Erfinder: Krebs, Matthias, 73105 Dürnau (DE)
(74) Vertreter: Ruckh, Rainer Gerhard

(56) Entgegenhaltungen:
- US-A1- 2019 043 281
- US-A1- 2021 049 772
- US-A1- 2021 158 675

## Beschreibung

Die Erfindung betrifft ein Sensorsystem und ein Verfahren zum Betrieb eines Sensorsystems.

Derartige Sensorsysteme umfassen ein Kamerasystem, mit welchem in einem Innenraum eines Gebäudes Objekte erfasst werden können.

Derartige Sensorsysteme können beispielsweise zur Überwachung von Innenräumen in Gebäuden eingesetzt werden. Dann ist das Kamerasystem stationär in einem Innenraum eines Gebäudes so angeordnet, dass in den Innenraum eindringende Personen erkannt werden. Das Sensorsystem kann dann ein Alarmsystem ausbilden, das eine Alarmmeldung generiert, wenn eine Person in den Innenraum eindringt.

Weiterhin ist es bekannt, Sensorsysteme mit Kamerasysteme in Kaufhäusern zum Diebstalschutz einzusetzen. Mit vom Kamerasystem aufgenommenen Bildsequenzen können Kaufhausdiebe ausfindig gemacht werden.

Die US 2021/0049772 A1 beschreibt ein automatisiertes Ladengeschäft, in welchem Bewegungen von Personen mit einem Kamerasystem verfolgt werden. Die Personenverfolgung erfolgt anonym. Eine Unterscheidung von Personen erfolgt durch eine Analyse von mit dem Kamerasystem erzeugten Bildern, aus welchen Unterscheidungscharakteristiken abgeleitet werden. Für eine Zugangskontrolle kann eine Person einen RFID-Tag, eine Kreditkarte oder ein Smartphone mit sich führen.

Die US 2021/0158675 A1 betrifft ein Personenverfolgungssystem mit einem Kamerasystem, das Bewegungen von Personen zeitaufgelöst erfasst. Weiterhin sind mobile Endgeräte vorgesehen, mit denen Personen Informationen von einem Server empfangen können.

Die US 2019/0043281 A1 betrifft ein System zur Verfolgung von Personen in einem Themenpark. Gäste des Themenparks werden mittels elektronischer Tickets authentifiziert. Die Verfolgung von Personen erfolgt anhand von RFID-Tags.

Der Erfindung liegt die Aufgabe zugrunde, ein Sensorsystem mit hoher Funktionalität bereitzustellen.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft ein Sensorsystem mit einem in einem Innenraum eines Gebäudes angeordneten Kamerasystem, welches zur Bestimmung von Objekten oder Personen im Innenraum ausgebildet ist. Mit einer Steuer- und Auswerteeinheit werden Sensorsignale des Kamerasystems ausgewertet. Einem Benutzer ist wenigstens ein Endgerät zugeordnet. Dem Endgerät wird von der Steuer- und Auswerteeinheit eine eindeutige Benutzerkennung zugewiesen, wobei nach erfolgter Authentifizierung des Benutzers für das oder jedes Endgerät eine temporäre Benutzerkennung vergeben wird, die nur für den Zeitraum einer Besucher-Session, d.h. der Dauer des Aufenthalts des Benutzers im Innenraum, gültig ist und danach gelöscht wird. In der Steuer- und Auswerteeinheit wird eine Objektverfolgung anhand von Signalen des Kamerasystems und der das Endgerät kennzeichnenden Benutzerkennung durchgeführt. Abhängig hiervon werden Ausgangsdaten generiert.

Die Erfindung betrifft auch ein entsprechendes Verfahren.

Mit dem erfindungsgemäßen Sensorsystem wird eine Objektverfolgung innerhalb eines Innenraums eines Gebäudes ermöglicht. Wesentlich hierbei ist, dass bei dem erfindungsgemäßen Sensorsystems ein Kamerasystem in Kombination mit einer Benutzerkennung für ein Endgerät eines Benutzers eingesetzt wird. Mit dem Kamerasystem erfasste Sensorsignale werden in einer zentralen Steuer- und Auswerteeinheit mit der Benutzerkennung des Endgeräts verknüpft. Damit liefern die Sensorsignale des Kamerasystems, die auf das Endgerät mit der Benutzerkennung bezogen sind, benutzerspezifische Informationen, die in der Steuer- und Auswerteeinheit ausgewertet werden, um entsprechende Ausgangssignale zu generieren.

Die Ausgangssignale liefern nicht nur Informationen über eine benutzerspezifische Nutzung des Innenraums. Vielmehr können, insbesondere durch Objektverfolgung einer Vielzahl von Benutzern, Ausgangssignale ermittelt werden, die zur Optimierung von Einrichtungen von Innenräumen abhängig vom Benutzerverhalten genutzt werden können.

Besonders vorteilhaft wird in der Steuer- und Auswerteeinheit anhand von Benutzerkennungen eine anonymisierte Kategorisierung von Benutzern durchgeführt. Für diese Benutzer-Kategorien werden Ausgangsdaten generiert.

Damit können unter Wahrung der Anonymität der Benutzer, für welche eine Objektverfolgung im Innenraum durchgeführt wird, für bestimmte Benutzer-Kategorien Ausgangsdaten generiert werden. Damit werden, insbesondere durch eine statistische Auswertung von erfassten Daten, für bestimmte Personengruppen, kategorisiert z.B. nach Alter oder Geschlecht, Informationen über die Nutzung des Innenraums oder dessen Einrichtung gewonnen. Diese Informationen können insbesondere von Betreibern geschäftlich genutzter Innenräume verwendet werden, um die jeweiligen Innenräume im Hinblick auf eine Kundenorientierung zu optimieren.

Schließlich können in der Steuer- und Auswerteeinheit generierte Ausgangssignale an das Endgerät eines Benutzers übertragen und dort angezeigt werden. Die Ausgangssignale können Informationen über den Innenraum bzw. dessen Nutzung enthalten, die dem Benutzer vorzugsweise abhängig von seinem Standort im Innenraum angezeigt werden. Die Ausgangsdaten sind dabei vorteilhaft spezifisch auf den jeweiligen Benutzer bezogen.

Eine besonders vorteilhafte Einsatzmöglichkeit des erfindungsgemäßen Sensorsystems ist dadurch gegeben, dass der Innenraum ein Verkaufsraum mit einer Auslage von Produkten ist, wobei mit dem Kamerasystem der gesamte Verkaufsraum erfasst wird.

Die Verkaufsräume können generell in Einkaufszentren vorhanden sein. Besonders vorteilhafte Applikationen sind Geschäfte des Einzelhandels.

Bei derartigen Applikationen kann in der Steuer- und Auswerteeinheit das Kaufverhalten von anonymisierten Benutzer-Kategorien erfasst werden.

Benutzerkennungen von Endgeräten werden anonym bestimmten Personengruppen zugeordnet. Typische Personengruppen sind Kinder-Jugendliche-Erwachsene oder Männer-Frauen oder Personen bestimmter Altersgruppen.

Für alle Benutzerkennungen, die einer Personengruppe zugeordnet sind, werden die Sensorsignale des Kamerasystems ausgewertet, wodurch ermittelt wird, welche Orte bzw. Positionen des Innenraums wann und wie häufig von den Personen aufgesucht werden, wobei natürlich ortsabhängig die Auslage von Produkten im Innenraum bekannt ist und auch die Entnahme von Produkten aus Regalen oder sonstigen Aufnahmen, die im Innenraum vorhanden sind, mit dem Kamerasystem kontrolliert wird.

Auf diese Weise kann für jede Personengruppe das Kaufverhalten über bestimmte Zeiträume ermittelt werden.

Dieses Kaufverhalten bestimmter Personengruppen kann z.B. den Betreibern von Geschäften zur Verfügung gestellt werden. Anhand dieser Informationen kann beispielsweise die Auslage von Produktion im jeweiligen Innenraum verändert werden. Auch kann die Beschaffung spezifischer Produkte im Hinblick auf das ermittelte Kaufverhalten optimiert werden.

Eine weitere vorteilhafte Anwendungsmöglichkeit besteht darin, dass ein Benutzer am Endgerät ein von ihm gewünschtes Produkt eingeben kann, worauf dem Benutzer abhängig von dessen Standort der Weg zu diesem Produkt angezeigt wird.

Der Benutzer kann somit von ihm gewünschte Produkte erheblich schneller auffinden. Aufwändiges Suchen nach Personal und dessen Befragung entfallen somit. Damit kann in Geschäften ohne zusätzlichen Personaleinsatz die Kundenzufriedenheit erheblich erhöht werden.

Besonders vorteilhaft wird dem Benutzer abhängig von dessen Standort dessen Umgebung im Verkaufsraum angezeigt.

Der Benutzer bekommt dann an seinem Endgerät einen Lageplan des Innenraums, d.h. Verkaufsraum, angezeigt, anhand dessen er sich einfach und schnell orientieren kann.

Zusätzlich werden dem Benutzer in der Umgebung vorhandene Produkte angezeigt.

Damit erhält der Benutzer schnell einen Überblick über im Verkaufsraum vorhandene Produkte. Da diese Produkte in der angezeigten Umgebung mit ihren genauen Lagen im Verkaufsraum angezeigt werden, sind diese für den Benutzer schnell auffindbar.

Gemäß einer vorteilhaften Ausführungsform bildet das Kamerasystem ein Triangulationssystem aus.

Mit dem Kamerasystem werden generell Bildinformationen gewonnen, anhand der Objekte und Personen erkannt werden können. Zudem dient das Kamerasystem auch zur Positionsbestimmung von Objekten und Personen im Innenraum, so dass eine zeitaufgelöst und ortsaufgelöste Objektverfolgung ermöglicht wird. Mittels der Triangulation wird eine besonders zuverlässige und genaue Positionsbestimmung ermöglicht, wobei die Messgenauigkeit typisch im Bereich von 10 cm liegt. Zur Durchführung von Triangulationsmessungen umfasst das Kameramodul mehrere ortsfest angeordnete Kameramodule, die somit in fester, bekannter, räumlicher Zuordnung zueinander stehen.

Gemäß einer besonders vorteilhaften Ausführungsform ist die Steuer- und Auswerteeinheit ein cloudbasiertes Rechnersystem.

Durch die Verlagerung der Steuer- und Auswerteeinheit in eine Cloud kann die Auswertung von Sensorsignalen des Kamerasystems und die Durchführung von Objektverfolgungen völlig unabhängig vom Installationsort des Kamerasystems erfolgen. Weiterhin ist damit eine einfache Erweiterung des Sensorsystems auf mehrere Kamerasysteme möglich, die in unterschiedlichen Innenräumen von Gebäuden an unterschiedlichen Orten angeordnet sind.

Zudem ist vorteilhaft, dass zur Ausbildung der Steuer- und Auswerteeinheit keine lokale Hardware installiert werden muss, was einen erhöhten Konstruktions- und Wartungsaufwand bedeuten würde.

Die Komponenten des Sensorsystems können vielmehr das Internet zur Anbindung an die Cloud nutzen, was keinen zusätzlichen Hardwareaufwand erfordert.

Gemäß einer vorteilhaften Ausgestaltung ist das Endgerät, das ein Benutzer mit sich führt, ein mobiles Endgerät, wie z.B. ein Smartphone.

In diesem Fall ist auf dem mobilen Endgerät eine App installiert, über welche eine Kommunikation mit der Steuer- und Auswerteeinheit erfolgt.

Der Benutzer gibt dabei am Display des mobilen Endgeräts Eingabebefehle zur Kommunikation mit der Steuer- und Auswerteeinheit ein. Für den Benutzer spezifisch in der Steuer- und Auswerteeinheit generierte Informationen werden dem Benutzer auf dem Display angezeigt.

Gemäß einer alternativen Ausgestaltung weist das Endgerät eine Datenbrille auf.

Damit bildet das Endgerät eine Augmented Reality Einheit. Die Datenbrille weist einen Prozessor auf, der die Kommunikation mit der Steuer- und Auswerteeinheit übernimmt. Eingabebefehle können durch Gestensteuerungen, Sprachbefehle und dergleichen eingegeben werden.

Informationen aus der Steuer- und Auswerteeinheit können als graphische Zusatzelemente in das Umgebungsbild, das der Benutzer durch die Datenbrille sieht, eingeblendet werden.

Um eine eindeutige Identifizierung eines Benutzers zu gewährleisten, wird dessen Endgerät eine Benutzerkennung zugewiesen, die an die Steuer- und Auswerteeinheit übertragen wird. Als Benutzerkennung eignen sich generell Authentifizierungsdaten wie Codes. Besonders vorteilhaft ist die Benutzerkennung eine Face-ID, d.h. es erfolgt eine Gesichtserkennung des Benutzers.

Aus Gründen der Datensicherheit und des Datenschutzes ist es vorgesehen, dass für das oder jedes Endgerät eine temporäre Benutzerkennung vergeben wird, die nur für den Zeitraum einer Besucher-Session gültig ist.

Nachdem der Benutzer den Innenraum verlassen hat, wird die Benutzerkennung in der Steuer- und Auswerteeinheit gelöscht.

Die Erfindung wird im Folgenden anhand der Zeichnungen erläutert. Es zeigen:
- Figur 1:: Schematische Darstellung eines Ausführungsbeispiels des erfindungsgemäßen Sensorsystems.
- Figur 2:: Beispiel eines Innenraums mit einem dort installierten Kamerasystems des erfindungsgemäßen Sensorsystems.

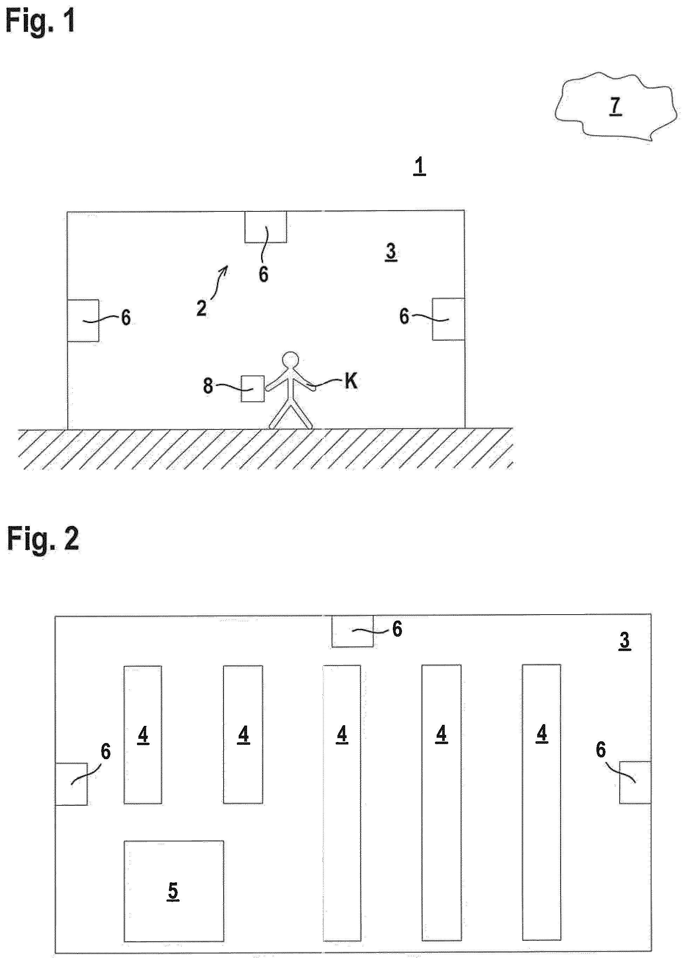

Figur 1 zeigt in stark schematisierter Form ein Ausführungsbeispiel des erfindungsgemäßen Sensorsystems 1.

Das Sensorsystem 1 umfasst ein Kamerasystem 2, das in einem Innenraum 3 eines Gebäudes installiert ist. Der Innenraum 3 des Gebäudes kann ein Verkaufsraum eines Einzelhandelsgeschäfts sein, wie in Figur 2 stark schematisiert dargestellt. In diesem Verkaufsraum befinden sich in bekannter Weise Regale 4 oder sonstige Ablagen zur Präsentation von Produkten sowie ein Kassensystem 5.

Das Kamerasystem 5 umfasst mehrere Kameramodule 6, die ortsfest in definierten Abständen zueinander, an Innenwänden oder an der Decke des Innenraums 3 installiert sind. Jedes Kameramodul 6 weist in bekannter Weise einen Bildsensor mit zugeordneter Optik auf. Zudem kann das Kameramodul 6 eine Beleuchtungseinheit aufweisen. Schließlich weist das Kameramodul 6 eine Auswerteeinheit auf, in welcher vom Bildsensor generierte Empfangssignale ausgewertet werden, wodurch Bildinformationen gewonnen werden. Vorteilhaft sind die Abstände der Kameramodule 6 zueinander in den Auswerteeinheiten hinterlegt.

Die Kameramodule 6 des Kamerasystems 2 bilden ein Triangulationssystem, mit dem nicht nur Bildinformationen von Objekten bzw. Personen gewonnen werden können, sondern auch deren Positionen im Innenraum 3 bestimmt werden können.

Das Kamerasystem 2 mit seinen Kameramodulen 6 ist über das Internet mit einer Cloud, d.h. einem cloudbasierten Rechnersystem verbunden, das eine Steuer- und Auswerteeinheit 7 des Sensorsystems 1 bildet.

Die Steuer- und Auswerteeinheit 7 steuert die Komponenten des Sensorsystems 1 und wertet im Kamerasystem 2 generierte Sensorsignale oder daraus abgeleitete Größen aus.

Personen, die sich im Innenraum 3 aufhalten, können anhand eines Endgeräts 8, das sie mitführen, identifiziert werden. In Figur 1 ist eine Person dargestellt, die als Kunde K Zutritt zum Innenraum 3 erhält.

Das Endgerät 8 kann prinzipiell von einer Datenbrille gebildet sein, die ein Augmented Reality System ausbildet. In der Datenbrille ist ein Mikroprozessor vorhanden, der die Verbindung zur Steuer- und Auswerteeinheit 7 herstellt.

Im vorliegenden Fall ist das Endgerät 8 ein mobiles Endgerät, das insbesondere von einem Smartphone gebildet ist. Auf dem mobilen Endgerät ist eine App installiert, über welche die Verbindung des mobilen Endgeräts zur Steuer- und Auswerteeinheit 7 aufgebaut wird.

Bei Eintritt der Person in den Innenraum 3 erfolgt eine Authentifizierung der Person anhand von Authentifizierungsdaten, die von Codes oder einer Face-ID der Person gebildet sein können. Nach erfolgter Authentifizierung wird dem mobilen Endgerät dieser Person von der Steuer- und Auswerteeinheit 7 eine Benutzerkennung zugewiesen. Im vorliegenden Fall wird eine temporäre Benutzerkennung vergeben, die nur so lange gültig ist, wie sich die Person im Innenraum 3 aufhält. Danach wird die Benutzerkennung gelöscht.

In der Steuer- und Auswerteeinheit 7 erfolgt anhand der Sensorsignale des Kamerasystems 2 und der Benutzerkennungen der sich im Innenraum 3 aufhaltenden Personen eine Objektverfolgung, d.h. es wird zeitabhängig erfasst, wo sich die Personen aufhalten.

In der Steuer- und Auswerteeinheit 7 erfolgt eine Auswertung der so gewonnenen Messergebnisse derart, dass eine anonyme Benutzer-Kategorisierung vorgenommen wird. Die für einzelne Personen gewonnenen Messdaten werden unterschiedlichen Kategorien zugeordnet. Derartige Kategorien können Mann-Frau oder Erwachsene-Jugendliche-Kinder oder sonstige sein.

Für die einzelnen Benutzer-Kategorien wird dann anhand der Messwerte das Kaufverhalten ermittelt. Die so generierten Ausgangssignale werden in der Steuer- und Auswerteeinheit 7 gespeichert und können von autorisierten Personen, wie dem Betreiber des Einzelhandelsgeschäfts, abgerufen werden. Anhand dieser Informationen kann der Betreiber z.B. das Portfolio seiner Produkte oder die Auslage der Produkte im Innenraum 3 optimieren.

Weiterhin ist in der Steuer- und Auswerteeinheit 7 eine personenbezogene Auswertung von Messergebnissen für eine bestimmte Person möglich, wobei die Steuer- und Auswerteeinheit 7 in Abhängigkeit dieser Messergebnisse als Ausgangssignale Informationen generieren kann, die der Person auf ihrem Endgerät 8 angezeigt werden.

Beispielsweise kann eine Person mit ihrem Endgerät 8 ein von ihr gewünschtes Produkt anzeigen. In der Steuer- und Auswerteeinheit 7 wird dann abhängig vom aktuellen Standort am Endgerät 8 der Weg zum Produkt angezeigt. Dabei erfolgt die Anzeige vorzugsweise derart, dass auf dem Endgerät 8 abhängig vom aktuellen Standort die Umgebung des Innenraums 3 angezeigt wird, ggf. mit weiteren dort ausgelegten Produkten.

### Bezugszeichenliste

- (1): Sensorsystem
- (2): Kamerasystem
- (3): Innenraum
- (4): Regal
- (5): Kassensystem
- (6): Kameramodul
- (7): Steuer- und Auswerteeinheit
- (8): Endgerät

- (K): Kunde

## Patentansprüche

1. Sensorsystem (1) mit einem in einem Innenraum (3) eines Gebäudes angeordneten Kamerasystem (2), welches zur Bestimmung von Objekten oder Personen im Innenraum (3) ausgebildet ist, und mit einer Steuer- und Auswerteeinheit (7), in welcher Sensorsignale des Kamerasystems (2) ausgewertet werden, wobei wenigstens ein einem Benutzer zugeordnetes Endgerät (8) vorhanden ist, wobei dem Endgerät (8) von der Steuer- und Auswerteeinheit (7) eine eindeutige Benutzerkennung zugewiesen wird, **dadurch gekennzeichnet, dass** nach erfolgter Authentifizierung des Benutzers für das oder jedes Endgerät (8) eine temporäre Benutzerkennung vergeben wird, die nur für den Zeitraum einer Besucher-Session, d.h. der Dauer des Aufenthalts des Benutzers im Innenraum, gültig ist und danach gelöscht wird, dass in der Steuer- und Auswerteeinheit (7) eine Objektverfolgung anhand von Signalen des Kamerasystems (2) und der das Endgerät (8) kennzeichnenden Benutzerkennung durchgeführt wird und abhängig hiervon Ausgangsdaten generiert werden.

2. Sensorsystem (1) nach Anspruch 1, **dadurch gekennzeichnet, dass** das Kamerasystem (2) ein Triangulationssystem ausbildet.

3. Sensorsystem (1) nach einem der Ansprüche 1 oder 2, **dadurch gekennzeichnet, dass** die Steuer- und Auswerteeinheit (7) ein cloudbasiertes Rechnersystem ist.

4. Sensorsystem (1) nach einem der Ansprüche 1 bis 3, **dadurch gekennzeichnet, dass** das Endgerät (8) ein mobiles Endgerät ist.

5. Sensorsystem (1) nach einem der Ansprüche 1 bis 4, **dadurch gekennzeichnet, dass** auf dem mobilen Endgerät eine App installiert ist, über welche eine Kommunikation mit der Steuer- und Auswerteeinheit (7) erfolgt.

6. Sensorsystem (1) nach einem der Ansprüche 1 bis 5, **dadurch gekennzeichnet, dass** das Endgerät (8) eine Datenbrille aufweist.

7. Sensorsystem (1) nach einem der Ansprüche 1 bis 6, **dadurch gekennzeichnet, dass** die Benutzerkennung ein Code oder eine Face-ID ist.

8. Sensorsystem (1) nach einem der Ansprüche 1 bis 7, **dadurch gekennzeichnet, dass** in der Steuer- und Auswerteeinheit (7) anhand von Benutzerkennungen eine anonymisierte Kategorisierung von Benutzern durchgeführt wird, und dass für Benutzer-Kategorien Ausgangsdaten generiert werden, oder dass für einen Benutzer unter dessen Benutzerkennung in der Steuer- und Auswerteeinheit (7) individuelle Ausgangsdaten generiert und an das Endgerät (8) dieses Benutzers übertragen werden.

9. Sensorsystem (1) nach einem der Ansprüche 1 bis 8, **dadurch gekennzeichnet, dass** eine Mehrfachanordnung von Kamerasystemen (2) in verschiedenen Innenräumen von Gebäuden vorhanden ist, wobei die Sensorsignale der Kamerasysteme (2) in einer gemeinsamen Steuer- und Auswerteeinheit (7) ausgewertet werden.

10. Sensorsystem (1) nach einem der Ansprüche 1 bis 9, **dadurch gekennzeichnet, dass** der Innenraum (3) ein Verkaufsraum mit einer Auslage von Produkten ist, wobei mit dem Kamerasystem (2) der gesamte Verkaufsraum erfasst wird.

11. Sensorsystem (1) nach Anspruch 10, **dadurch gekennzeichnet, dass** in der Steuer- und Auswerteeinheit (7) das Kaufverhalten von anonymisierten Benutzer-Kategorien erfasst wird.

12. Sensorsystem (1) nach einem der Ansprüche 10 oder 11, **dadurch gekennzeichnet, dass** ein Benutzer am Endgerät (8) ein von ihm gewünschtes Produkt eingeben kann, worauf dem Benutzer abhängig von dessen Standort der Weg zu diesem Produkt angezeigt wird.

13. Sensorsystem (1) nach Anspruch 12, **dadurch gekennzeichnet, dass** dem Benutzer abhängig von dessen Standort dessen Umgebung im Verkaufsraum angezeigt wird, und/oder dass dem Benutzer in der Umgebung vorhandene Produkte angezeigt werden.

14. Verfahren zum Betrieb eines Sensorsystems (1) mit einem in einem Innenraum (3) eines Gebäudes angeordneten Kamerasystem (2), welches zur Bestimmung von Objekten oder Personen im Innenraum (3) ausgebildet ist, und mit einer Steuer- und Auswerteeinheit (7), in welcher Sensorsignale des Kamerasystems (2) ausgewertet werden, wobei wenigstens ein einem Benutzer zugeordnetes Endgerät (8) vorhanden ist, wobei dem Endgerät (8) von der Steuer- und Auswerteeinheit (7) eine eindeutige Benutzerkennung zugewiesen wird, **dadurch gekennzeichnet, daß** nach erfolgter Authentifizierung des Benutzers für das oder jedes Endgerät (8) eine temporäre Benutzerkennung vergeben wird, die nur für den Zeitraum einer Besucher-Session, d.h. der Dauer des Aufenthalts des Benutzers im Innenraum, gültig ist und danach gelöscht wird, dass in der Steuer- und Auswerteeinheit (7) eine Objektverfolgung anhand von Signalen des Kamerasystems (2) und der das Endgerät (8) kennzeichnenden Benutzerkennung durchgeführt wird und abhängig hiervon Ausgangsdaten generiert werden.

## Claims

1. Sensor system (1) comprising a camera system (2) arranged in an interior space (3) of a building, which is designed to detect objects or persons in the interior space (3), and comprising a control and evaluation unit (7), in which sensor signals from the camera system (2) are evaluated, wherein at least one terminal device (8) associated with a user is present, wherein the terminal device (8) is assigned a unique user identifier by the control and evaluation unit (7),
**characterised in that**, following successful authentication of the user, a temporary user ID is assigned to the or each terminal device (8), which is valid only for the duration of a visitor session, i.e. the duration of the user's stay in the interior, and is subsequently deleted, that object tracking is carried out in the control and evaluation unit (7) on the basis of signals from the camera system (2) and the user ID identifying the terminal device (8), and output data is generated depending thereon.

2. Sensor system (1) according to claim 1, **characterised in that** the camera system (2) forms a triangulation system.

3. Sensor system (1) according to one of claims 1 or 2, **characterised in that** the control and evaluation unit (7) is a cloud-based computer system.

4. Sensor system (1) according to any one of claims 1 to 3, **characterised in that** the terminal device (8) is a mobile terminal device.

5. A sensor system (1) according to any one of claims 1 to 4, **characterised in that** an app is installed on the mobile terminal, via which communication with the control and evaluation unit (7) takes place.

6. A sensor system (1) according to any one of claims 1 to 5, **characterised in that** the terminal device (8) comprises smart glasses.

7. A sensor system (1) according to any one of claims 1 to 6, **characterised in that** the user identifier is a code or a Face ID.

8. A sensor system (1) according to any one of claims 1 to 7, **characterised in that** an anonymised categorisation of users is carried out in the control and evaluation unit (7) on the basis of user identifiers, and that output data is generated for user categories, or that individual output data is generated for a user under their user identifier in the control and evaluation unit (7) and transmitted to that user's terminal device (8).

9. Sensor system (1) according to any one of claims 1 to 8, **characterised in that** a multiple arrangement of camera systems (2) is present in various interior spaces of buildings, wherein the sensor signals of the camera systems (2) are evaluated in a common control and evaluation unit (7).

10. Sensor system (1) according to any one of claims 1 to 9, **characterised in that** the interior (3) is a sales area with a display of products, wherein the entire sales area is captured by the camera system (2).

11. Sensor system (1) according to claim 10, **characterised in that** the purchasing behaviour of anonymised user categories is recorded in the control and evaluation unit (7).

12. Sensor system (1) according to any one of claims 10 or 11, **characterised in that** a user can enter a desired product on the terminal device (8), whereupon the route to this product is displayed to the user depending on their location.

13. Sensor system (1) according to claim 12, **characterised in that** the user is shown their surroundings in the sales area depending on their location, and/or that products present in the surroundings are shown to the user.

14. Method for operating a sensor system (1) comprising a camera system (2) arranged in an interior (3) of a building, which is designed to detect objects or persons in the interior (3), and comprising a control and evaluation unit (7), in which sensor signals from the camera system (2) are evaluated, wherein at least one terminal device (8) associated with a user is present, wherein the terminal device (8) is assigned a unique user identifier by the control and evaluation unit (7),
**characterised in that**, following successful authentication of the user, a temporary user identifier is assigned to the or each terminal device (8), which is valid only for the duration of a visitor session, i.e. the duration of the user's stay in the interior, and is subsequently deleted, that object tracking is carried out in the control and evaluation unit (7) on the basis of signals from the camera system (2) and the user ID identifying the terminal device (8), and output data is generated depending on this.

## Revendications

1. Système de capteur (1) comprenant un système de caméra (2) disposé dans un espace intérieur (3) d'un bâtiment, qui est conçu pour détecter des objets ou des personnes dans l'espace intérieur (3), et comprenant une unité de commande et d'évaluation (7), dans laquelle les signaux de capteur provenant du système de caméra (2) sont évalués, dans lequel au moins un terminal (8) associé à un utilisateur est présent, dans lequel le terminal (8) se voit attribuer un identifiant utilisateur unique par l'unité de commande et d'évaluation (7),
**caractérisé en ce que**, après authentification réussie de l'utilisateur, un identifiant utilisateur temporaire est attribué au ou à chaque terminal (8), qui n'est valable que pour la durée d'une session de visiteur, c'est-à-dire la durée du séjour de l'utilisateur à l'intérieur, et est ensuite supprimé, **en ce que** le suivi d'objets est effectué dans l'unité de commande et d'évaluation (7) sur la base des signaux provenant du système de caméra (2) et de l'identifiant d'utilisateur identifiant le dispositif terminal (8), et des données de sortie sont générées en fonction de ceux-ci.

2. Système de capteur (1) selon la revendication 1, **caractérisé en ce que** le système de caméra (2) forme un système de triangulation.

3. Système de capteur (1) selon l'une des revendications 1 ou 2, **caractérisé en ce que** l'unité de commande et d'évaluation (7) est un système informatique reposant sur le cloud.

4. Système de capteur (1) selon l'une quelconque des revendications 1 à 3, **caractérisé en ce que** le dispositif terminal (8) est un dispositif terminal mobile.

5. Système de capteur (1) selon l'une quelconque des revendications 1 à 4, **caractérisé en ce qu'**une application est installée sur le terminal mobile, par l'intermédiaire de laquelle s'effectue la communication avec l'unité de commande et d'évaluation (7).

6. Système de capteur (1) selon l'une quelconque des revendications 1 à 5, **caractérisé en ce que** le dispositif terminal (8) comprend des lunettes intelligentes.

7. Système de capteur (1) selon l'une quelconque des revendications 1 à 6, **caractérisé en ce que** l'identifiant d'utilisateur est un code ou un Face ID.

8. Système de capteur (1) selon l'une quelconque des revendications 1 à 7, **caractérisé en ce qu'**une catégorisation anonymisée des utilisateurs est effectuée dans l'unité de commande et d'évaluation (7) sur la base d'identifiants d'utilisateur, et **en ce que** des données de sortie sont générées pour des catégories d'utilisateurs, ou **en ce que** des données de sortie individuelles sont générées pour un utilisateur sous son identifiant d'utilisateur dans l'unité de commande et d'évaluation (7) et transmises au terminal (8) de cet utilisateur.

9. Système de capteur (1) selon l'une quelconque des revendications 1 à 8, **caractérisé en ce qu'**un agencement multiple de systèmes de caméra (2) est présent dans divers espaces intérieurs de bâtiments, les signaux des capteurs des systèmes de caméra (2) étant évalués dans une unité de commande et d'évaluation commune (7).

10. Système de capteur (1) selon l'une quelconque des revendications 1 à 9, **caractérisé en ce que** l'intérieur (3) est une surface de vente avec une présentation de produits, dans lequel l'ensemble de la surface de vente est filmé par le système de caméra (2).

11. Système de capteur (1) selon la revendication 10, **caractérisé en ce que** le comportement d'achat de catégories d'utilisateurs anonymisées est enregistré dans l'unité de commande et d'évaluation (7).

12. Système de capteur (1) selon l'une quelconque des revendications 10 ou 11, **caractérisé en ce qu'**un utilisateur peut saisir un produit souhaité sur le terminal (8), après quoi l'itinéraire vers ce produit est affiché à l'utilisateur en fonction de sa position.

13. Système de capteur (1) selon la revendication 12, **caractérisé en ce que** l'utilisateur se voit présenter son environnement dans la zone de vente en fonction de sa position, et/ou **en ce que** les produits présents dans cet environnement sont présentés à l'utilisateur.

14. Procédé d'exploitation d'un système de capteur (1) comprenant un système de caméra (2) disposé à l'intérieur (3) d'un bâtiment, qui est conçu pour détecter des objets ou des personnes à l'intérieur (3), et comprenant une unité de commande et d'évaluation (7), dans laquelle les signaux de capteur provenant du système de caméra (2) sont évalués, dans lequel au moins un terminal (8) associé à un utilisateur est présent, dans lequel le terminal (8) se voit attribuer un identifiant utilisateur unique par l'unité de commande et d'évaluation (7),
**caractérisé en ce que**, après authentification réussie de l'utilisateur, un identifiant d'utilisateur temporaire est attribué au ou à chaque terminal (8), qui n'est valable que pour la durée d'une session de visiteur, c'est-à-dire la durée du séjour de l'utilisateur à l'intérieur, et est ensuite supprimé, que le suivi d'objets est effectué dans l'unité de commande et d'évaluation (7) sur la base des signaux provenant du système de caméra (2) et de l'identifiant utilisateur identifiant le dispositif terminal (8), et que des données de sortie sont générées en fonction de cela.
